Europäisches Patentamt

European Patent Office

Office européen des brevets

(11) Publication number: **0 283 054 B1**

## EUROPEAN PATENT SPECIFICATION

(45) Date of publication of patent specification: **19.02.92** (51) Int. Cl.⁵: **H02B 1/24**

(21) Application number: **88105442.3**

(22) Date of filing: **28.02.84**

(60) Publication number of the earlier application in accordance with Art.76 EPC: **0 118 094**

(54) Generator circuitry.

(30) Priority: **04.03.83 JP 31756/83**
**04.03.83 JP 31757/83**
**04.03.83 JP 31758/83**

(43) Date of publication of application:
**21.09.88 Bulletin 88/38**

(45) Publication of the grant of the patent:
**19.02.92 Bulletin 92/08**

(84) Designated Contracting States:
**CH DE FR LI**

(56) References cited:
**DE-A- 2 316 099**
**FR-A- 2 168 294**
**FR-A- 2 277 455**

(73) Proprietor: **MITSUBISHI DENKI KABUSHIKI KAISHA**
**2-3, Marunouchi 2-chome Chiyoda-ku Tokyo 100(JP)**

(72) Inventor: **Yamauchi, Takao c/o MITSUBISHI DENKI K.K.**
**Itami Works 1-1, Tsukaguchi Honmachi 8-chome**
**Amagasaki-shi Hyogo(JP)**

Inventor: **Suzuki, Hayato c/o MITSUBISHI DENKI K.K.**
**Itami Works 1-1, Tsukaguchi Honmachi 8-chome**
**Amagasaki-shi Hyogo(JP)**
Inventor: **Iwabuchi, Osamu c/o MITSUBISHI DENKI K.K.**
**Itami Works 1-1, Tsukaguchi Honmachi 8-chome**
**Amagasaki-shi Hyogo(JP)**
Inventor: **Kishimoto, Toshinobu c/o MITSUBISHI DENKI K.K.**
**Itami Works 1-1, Tsukaguchi Honmachi 8-chome**
**Amagasaki-shi Hyogo(JP)**

(74) Representative: **Eisenführ, Speiser & Strasse**
**Martinistrasse 24**
**W-2800 Bremen 1(DE)**

EP 0 283 054 B1

## Description

The invention relates to a generator circuitry having a first disconnector, a breaker and a second disconnector connected in series with one another between a generator and a bus connected to a power supply, the breaker having an interelectrode capacitance between its contacts in its open position.

From FR-A 22 77 455 a circuit is known which relates to an inhibitor circuit for a generator switch for preventing that a generator and a power network are connected to each other when the voltages are of opposite or non-synchronized phase. Connection is only possible if the voltage difference between generator and power network is below a predetermined value. No mention is being made about capacitive coupling over the electrodes of an open breaker switch.

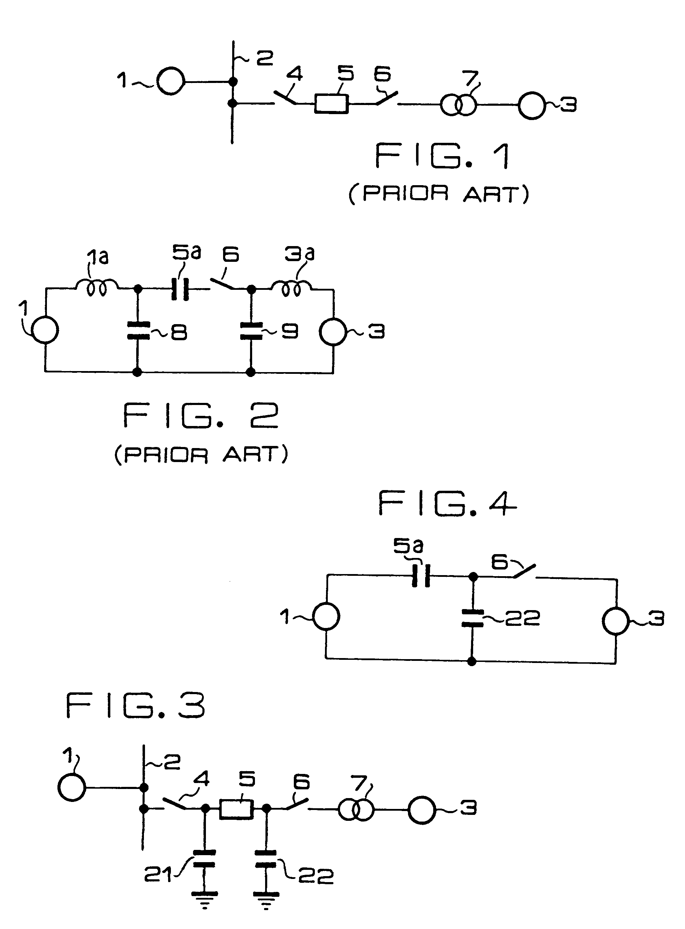

Fig. 1 schematically shows a known ordinary generator circuitry employed for connection or disconnection of a generator (3) to or from a bus (2) connected to an AC power supply (1). The circuitry comprises a first connector (4), a breaker (5), a second connector (6) and a main transformer (7) which are connected in series with one another in this order between the bus (2) and the generator (3).

Fig. 2 is an equivalent circuit diagram of the generator circuitry of Fig. 1, wherein there are shown an internal inductance (1a) of the power supply (1), an internal inductance (3a) of the generator (3), a capacitance (8) of a capacitor inserted between the ground and the joint of the first disconnector (4) and the breaker (5), a capacitance (9) of a capacitor inserted between the ground and the joint of the second disconnector (6) and the generator (3), and a capacitance (5a) of an interelectrode capacitor in the breaker (5).

In such a generator circuitry, an operation of connecting the generator (3) to or disconnecting the same from the power supply (1) is performed by closing or opening the breaker (5) in the state where the power supply (1) and the generator (3) are synchronized with each other. During this operation, the two disconnectors (4) and (6) connected to the two sides of the breaker (5) are kept closed.

When it becomes necessary to open the first disconnector (4) or the second disconnector (6) posterior to disconnection of the generator (3), each of such disconnectors needs to interrupt the charge current flowing to the capacitance of the interelectrode capacitor in the breaker (5). Particularly under such condition that there exists a great voltage phase difference between the power supply (1) and the generator (3), the interelectrode voltage applied between the two disconnectors (4) and (6) reaches a high level since the terminal voltage across the capacitance (5a) is high. Such a high interelectrode voltage renders severe the condition for interruption of the charge current while causing generation of an abnormally high voltage due to re-ignition. Therefore, it is requisite for each of the disconnectors (4) and (6) to have a sufficient switching capacity to withstand such a high voltage, hence inducing a disadvantage that the generator circuitry becomes dimensionally large.

It is an object of the present invention to provide and improved generator circuitry which permits use of small disconnectors and thereby achieving dimensional reductions of the entire structure.

This object is being achieved by a generator circuitry of the kind defined, which is characterized by an impedance element inserted between the ground and the joint of said breaker and said disconnector.

Preferred embodiments of the present invention are defined in the dependent claims.

Brief Description of the Drawings:

Fig. 1 is a schematic circuit diagram of a conventional generator circuitry;

Fig. 2 is an equivalent circuit diagram of the generator circuitry shown in Fig. 1;

Fig. 3 is a schematic circuit diagram of an embodiment of the invention;

Fig. 4 is an equivalent circuit diagram showing the state where a disconnector on the power supply side is closed in the generator circuitry of Fig. 3;

Fig. 5 is a schematic circuit diagram of another generator circuitry to which the invention can be applied; and

Fig. 6 is a schematic circuit diagram of a generator circuitry to which the invention can be applied.

The generator circuitry of Fig. 3 embodying this invention has a first capacitor (21) inserted between the ground and the joint of a first disconnector (4) and a breaker (5), and a second capacitor (22) inserted between the ground and the joint of a second disconnector (6) and the breaker (5). Since other components are the same as those shown previously in Fig. 1, the corresponding ones are represented by like reference numerals and a repeated explanation is omitted here. Each of the capacitances of the first and second capacitors (21, 22) is so selected as to be approximate to or greater than the interelectrode capacitance (5a) in the breaker (5).

Fig. 4 shows an equivalent circuit in the state where the breaker (5) and the first disconnector (4) are closed while the second disconnector (6) is open. Since the capacitance of the capacitor (22) is equal to or greater than the interelectrode capacitance (5a) in the breaker (5) as mentioned previously, an action of voltage division is exerted so that, even when the generator (3) is not exactly synchronized with the power supply, the voltage applied across the second disconnector (6) becomes far lower than that in the absence of the capacitor (22), thereby reducing the interruption duty of the second disconnector.

Similar effect is achievable due to the voltage division of the capacitor (21) also in the state where the second disconnector (6) is closed while the first disconnector (4) is open. Therefore, each of the two disconnectors (4, 6) may be an ordinary one having a normal interruption capacity.

The capacitors (21, 22) may be condenser type bushings or gas-insulated condensers. In place of such capacitors, it is possible to employ other impedance elements such as zinc oxide type arresters adapted for suppression of abnormal voltage.

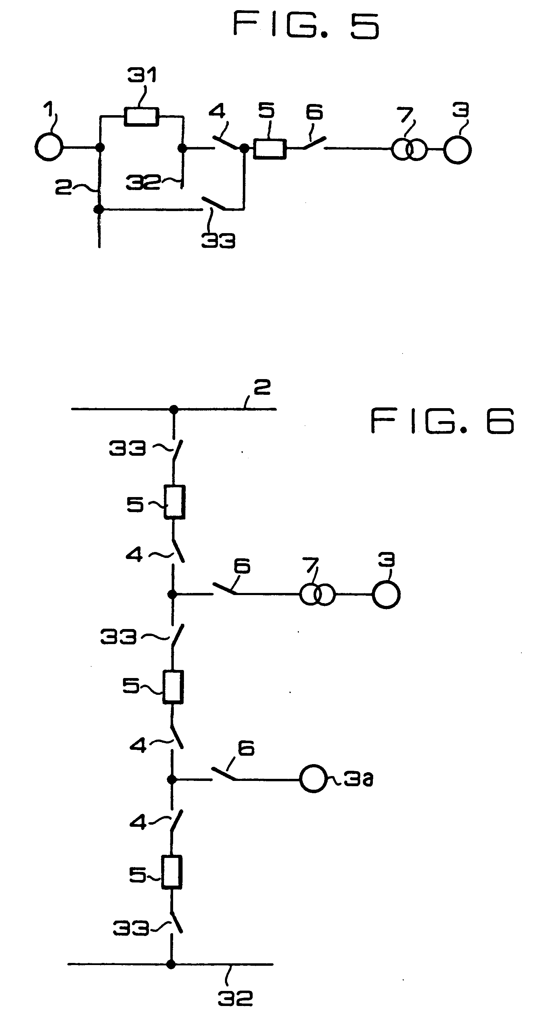

The present invention is further applicable to a generator circuitry of Fig. 5, which is different from the foregoing embodiment of Fig. 1 in the following point. That is, a second bus (32) is connected to the aforesaid bus (2) via a second breaker (31), and a third disconnector (33) is inserted between the second bus (32) and the first breaker (5).

Fig. 6 shows another exemplary generator circuitry of a composite interruption system to which the invention can be applied., wherein the same components as those used in the foregoing circuitry of Fig. 5 are represented by like reference numerals and a repeated explanation is omitted. In Fig. 6, a reference numeral (3a) denotes a second generator.

As described hereinabove, according to the present invention which is capable of reducing the interruption duty of at least one of disconnectors, it becomes possible to employ small-sized disconnectors to eventually realize a compact and lightweight generator circuitry.

## Claims

1. In a generator circuitry having a first disconnector (4), a breaker (5) and a second disconnector (6) connected in series with one another between a generator (3) and a bus (2) connected to a power supply (1), the breaker having an interelectrode capacitance between its contacts in its open position, characterized by an impedance element (22) inserted between the ground and the joint of said breaker (5) and said second disconnector (6).

2. The generator circuitry as defined in claim 1, further including another impedance element (21) inserted between the ground and the joint of said first disconnector (4) and said breaker (5).

3. The generator circuitry as defined in claim 1 or 2, wherein said impedance element is a capacitor (21, 22).

4. The generator circuitry as defined in claim 3, wherein the capacitance of said capacitor (21, 22) is equal to or greater than the interelectrode capacitance (5a) of said breaker (5).

5. The generator circuitry as defined in claim 3, wherein said capacitor (21, 22) is a condenser type bushing.

6. The generator circuitry as defined in claim 3, wherein said capacitor (21, 22) is a gas-insulated capacitor.

7. The generator circuitry as defined in claim 2, wherein said impedance element (21, 22) is a zinc oxide type arrester.

## Revendications

1. Circuit de générateur comprenant un premier sectionneur (4), un coupe-circuit (5) et un second sectionneur (6) reliés en série les uns aux autres entre un générateur (3) et un bus (2) raccordé à une alimentation en énergie (1), le coupe-circuit présentant une capacité interélectrode entre ses contacts dans sa position ouverte, caractérisé en ce qu'un élément d'impédance (22) est inséré entre la terre et la jonction entre ledit coupe-circuit (5) et ledit second sectionneur (6).

2. Circuit de générateur selon la revendication 1, comprenant en outre un autre élément d'impédance (21) inséré entre la terre et la jonction entre ledit premier sectionneur (4) et ledit coupe-circuit (5).

3. Circuit de générateur selon la revendication 1 ou la revendication 2, dans lequel ledit élément d'impédance est un condensateur (21, 22).

4. Circuit de générateur selon la revendication 3, dans lequel la capacité dudit condensateur (21, 22) est égale ou supérieure à la capacité interélectrode (5a) dudit coupe-circuit (5).

5. Circuit de générateur selon la revendication 3, dans lequel ledit condensateur (21, 22) est une traversée de type condensateur.

6. Circuit de générateur selon la revendication 3, dans lequel ledit condensateur (21, 22) est un condensateur isolé au gaz.

7. Circuit de générateur selon la revendication 2, dans lequel ledit élément d'impédance (21, 22) est un parafoudre du type à oxyde de zinc.

**Patentansprüche**

1. Generatorschaltung mit einem ersten Trennschalter (4), einem Leistungsschalter (5) und einem zweiten Trennschalter (6), die in Serie miteinander zwischen einen Generator (3) und eine mit einem Stromnetz (1) verbundene Sammelschiene (2) geschaltet sind, wobei der Leistungsschalter (5) eine Zwischenelektrodenkapazität zwischen seinen geöffneten Kontakten aufweist, gekennzeichnet durch ein Impedanzelement (22), das zwischen Erde und den Verbindungspunkt zwischen dem Leistungsschalter (5) und dem zweiten Trennschalter geschaltet ist.

2. Generatorschaltung nach Anspruch 1, gekennzeichnet durch ein weiteres Impedanzelement (21), das zwischen Erde und den Verbindungspunkt zwischen dem ersten Trennschalter (4) und dem Leistungsschalter (5) geschaltet ist.

3. Generatorschaltung nach Anspruch 1 oder 2, dadurch gekennzeichnet, daß das Impedanzelement ein Kondensator (21, 22) ist.

4. Generatorschaltung nach Anspruch 3, dadurch gekennzeichnet, daß die Kapazität des Kondensators (21, 22) gleich oder größer als die Zwischenelektrodenkapazität (5a) des Leistungsschalters (5) ist.

5. Generatorschaltung nach Anspruch 3, dadurch gekennzeichnet, daß der Kondensator (21, 22) ein Durchführungskondensator ist.

6. Generatorschaltung nach Anspruch 3, dadurch gekennzeichnet, daß der Kondensator (21, 22) ein gasisolierter Kondensator ist.

7. Generatorschaltung nach Anspruch 2, dadurch gekennzeichnet, daß das Impedanzelement (21, 22) ein Zinkoxyd-

Überspannungsschutzelement ist.

F I G . 1

(PRIOR ART)

F I G . 2

(PRIOR ART)

F I G . 4

F I G . 3

# FIG. 5

# FIG. 6